# EUROPEAN PATENT SPECIFICATION

(11) **EP 4 163 187 B1**
(45) Date of publication and mention of the grant of the patent: **30.04.2025**
(21) Application number: 21200846.0
(22) Date of filing: 05.10.2021
(51) Int. Cl.: B62D 5/09, B62D 15/02

(54) **METHOD FOR CALIBRATING A FULLY HYDRAULIC STEERING SYSTEM**
VERFAHREN ZUR KALIBRIERUNG EINES VOLLHYDRAULISCHEN LENKSYSTEMS
PROCÉDÉ D'ÉTALONNAGE D'UN SYSTÈME DE DIRECTION ENTIÈREMENT HYDRAULIQUE

(43) Date of publication of application: 12.04.2023
(73) Proprietor: Danfoss Power Solutions ApS, 6430 Nordborg (DK)
(72) Inventor: Petersen, Morten Hoeck, 6430 Nordborg (DK)
(74) Representative: Keil & Schaafhausen Patentanwälte PartGmbB

(56) References cited:
- US-A1- 2013 054 074

## Description

The present invention relates to a method for calibrating a fully hydraulic steering system of a vehicle having steered wheels and a hydraulic steering motor, in which method the steered wheels are moved by the steering motor in one direction until they reach a first end position and are then moved in the opposite direction until they reach a second end position, wherein the hydraulic steering system comprises a wheel angle sensor determining the wheel angle of the steered wheels.

US 2013/0054074A1 describes a guidance system automatic wheel angle sensor calibration for a hydraulic and/or electronic steering system. A vehicle comprises two wheels, which are steered by a steering assembly comprising a linage to hydraulic cylinders that are located proximal to respective wheels. The vehicle comprises one or more wheel angle sensors, which measures the wheel angle α and β relative to the center wheel position. A processor system is coupled to the steering valve spool assembly and the wheel angle sensor. The processor system sends an actuation signal to a steering valve spool assembly to cause a movement of the wheels to a first full steering position, in which the wheel angle sensors detect the wheel angle sensor value. Subsequently, the wheels are moved to a second full steering position, in which the wheel angle sensors detect the wheel angel sensor value. The processer system computes the average of α and β to derive a target center wheel position. Yaw sensors determine yaw sensors values, wherein yaw sensor values correspond to errors in the target center wheel position are monitored. The recorded wheel angle sensor value corresponding to the target center wheel position is adjusted to provide an adjusted target center wheel position. The adjustment is based on the yaw sensor values.

In a fully hydraulic steering system, there is no mechanical connection between a steering command device, for example a steering wheel or a joystick, and the steered wheels. Thus, it is not possible to move the steered wheels manually from one end position to the other.

Nevertheless, for a reliable control of the steering system it is necessary to know the "neutral position" of the steered wheels in which the vehicle drives straight ahead. Thus, the calibration of the fully hydraulic steering system is necessary from time to time.

The object underlying the invention is to calibrate a fully hydraulic steering system.

This object is solved by the features of claim 1.

Further embodiments are described in dependent claims.

A relationship between the steering angle and the signal of the wheel sensor is described by a non-linear function. The wheel angle sensor determines a first signal in the first end position and a second signal in the second end position wherein a neutral position of the steering motor is determined by determining a neutral signal between the first signal and the second signal, wherein the difference between the neutral signal and the first signal is substantially equal to the difference between the neutral signal and the second signal.

In this way it is possible to determine the neutral position based on an existing wheel angle sensor provided in the fully hydraulic steering system although the relationship between the signal of the wheel angle sensor and the wheel angle is non-linear. The wheel angle sensor provides output signals based on certain measured angles. The first and the second signal are signals determined at a first end position and a second end position, respectively, wherein the first end position and the second end position describe the maximum steering angle of the steered wheels. Thus, the neutral position needs to be between the first end position and the second end position, wherein the neutral position is usually equally distanced to the first and the second end position. Thus, it is possible to determine the neutral position based on the signal of the wheel angle sensor.

The wheel angle sensor outputs the signals in form of a voltage. This allows the usage of different kind of electronical sensors, for example potentiometers. These kinds of sensors are cheap and widely common the implementation of the above described method is cost effective.

In an embodiment of the invention the first end position and the second end position are substantially symmetrically to the longitudinal axis of the vehicle. The longitudinal axis of the vehicle describes a line from the very front to the very rear of the vehicle, basically in the direction of a straightforward movement. Since fully hydraulic steering systems are usually used in heavy machinery applications like civil working equipment or mining equipment, where the tolerances are rather great, the first end position and the second end position are substantially symmetrically, but can differ in a certain amount by around 5 %. Thus, the implementation of the method is simple.

A virtual steering angle in relation to the respective voltage is repeatedly determined. The relationship between the virtual steering angle and the respective voltage, i. e. the non-linear function, can be imagined as a graph, wherein an increase in the virtual steering angle results in an increase in voltage. This relation can be described in a graph. The difference in voltage between the second signal and the first signal can be put in perspective to the graph, wherein in the neutral position, basically the middle position of the difference between the second signal and the first signal, is located on the graph. The middle position should be also understood as middle area to take into account the tolerances. The intersection between the graph and the difference between the second signal and the first signal in its middle position indicates the neutral steering angle.

The neutral position is checked based on the virtual steering angle in relation to the sensor. The angle of the steering wheels from the first end position to the second end position is determined by the wheel angle sensor. In a symmetrical steering system this angle is divided by two, since the neutral position is substantially halfway between the first end position and the second end position. Thus, the difference between the second signal and the first signal is put in perspective to the graph such that the angle between the neutral position and the first end position and between the neutral position and the second end position is equal. In this way it can be checked whether the neutral position is determined in a right way, such that possible errors can be avoided.

In an embodiment of the invention the wheel angle of the steered wheels is determined in relation to the longitudinal axis of the vehicle. This is a common measurement of the angle between the steered wheels and the vehicle.

In an embodiment of the invention an end position is detected when a signal of the wheel sensor does not change for a predetermined period of time. This allows a determination of the end positions.

An embodiment of the invention will now be described with reference to the drawing, in which:
- Fig. 1: shows schematically components of a fully hydraulic steering of a vehicle and
- Fig. 2: shows some drafts of the illustration of the calibration of the fully hydraulic steering system according to Fig. 1.

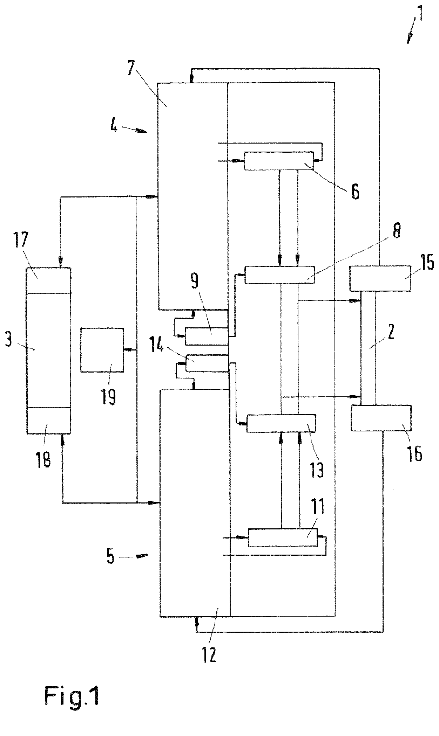

Fig. 1 shows schematically components of a fully hydraulic steering system 1 of the vehicle. The vehicle has steered wheels and a hydraulic steering motor 2. The steering motor 2 is used to move the steered wheels. In the following the term "moving" relates to the change of the angle of the wheels which in turn changes the direction average the vehicle drives. The steering motor 2 is preferably in form of a steering cylinder.

The system 1 comprises a steering command device 3, for example a steering wheel or a joystick. Furthermore, the system comprises two branches 4, 5 which are arranged in parallel. Each of the branches 4, 5 is able to control the steering of the vehicle, so that a fail safe operation is possible. In case of one of the branches 4, 5 fails, the other branch 4, 5 can be used to steer the vehicle.

The first branch 4 comprises a main valve having a main spool 6, the position of which is controlled by a pilot valve arrangement 7. The pilot valve arrangement 7 can, for example, comprise four solenoid valves producing a pressure acting on the main spool 6 and adjusting the position of the main spool 6. Furthermore, the first branch 4 comprises a safety valve 8 which is controlled by a safety valve solenoid 9. The safety valve 8 is preferably in form of a cut-off valve to be able to cut off the connection between associated valve and the steering motor 2 in case of a failure in one branch.

The second branch 5 is identical to the first branch 4. It comprises a main spool valve having a main spool 11 which is controlled by a pilot valve arrangement 12. Furthermore, the second branch 5 comprises a safety valve 13 which is controlled by a safety valve solenoid 14.

Both spool valves control the flow of hydraulic fluid to the steering motor 2.

The system 1 comprises furthermore wheel angle sensors 15, 16. In Fig. 1 these wheel angle sensors are shown connected to the steering motor 2. It is, however, also possible to locate the wheel angle sensors 15, 16 in a position of the steered wheels.

The steering command device 3 is also provided with the sensors 17, 18. Furthermore, a MMI/service tool 19 is provided for steering the calibration of the system.

In the fully hydraulic steering system 1 there is no mechanical connection between the steering command device 3 and the steering motor 2. Therefore, it is not possible to manually actuate the steered wheels in order to find out a position, in which the steered wheels are in a neutral position. The neutral position is the position in which the vehicle is driven straightforward.

Thus, in order to find out this position, it is necessary to calibrate the steering system 1.

The calibration of the steering system 1 is made automatically in a condition of the vehicle, in which the vehicle stands still or is driven with a very slow speed in an area, in which there are no obstacles or points of danger.

In order to calibrate the fully hydraulic system 1 the system 1 is operated in such a way, that the steered wheels are brought respective moved in a first end stop position. In this end stop position the wheel angle sensors 15, 16 output a first signal. Afterwards, the steered wheels are moved into a second end stop position, wherein the wheel angle sensors 15, 16 output a second signal. Further, the wheel angle sensors determine the maximum steering angle from the first end stop position into the second end stop position. The first signal and the second signal, for example in form of two voltages, define a span from the first end stop position to the second end stop position, i. e. from the left end stop position to the right end stop position.

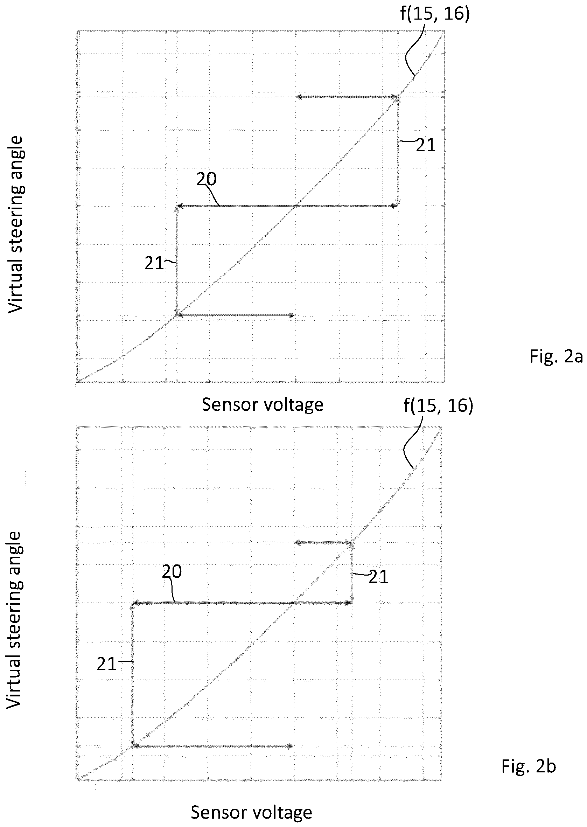

Fig. 2a depicts a virtual steering angle in relation to a respective voltage. The virtual steering angle is depicted on the y-axis (vertical axis in Fig. 2a), while the voltage is depicted on the x-axis (horizontal axis in Fig. 2a). The graphs f(15, 16) depicts the virtual steering angle in relation to the voltage, i. e. a non-linear function.

The voltage provided by the first signal and second signal is to be found on the x-axis of the Fig. 2a. The first voltage is at the position of the left line 21. The second voltage is at the position of the right line 21. The difference between these two voltages is shown with line 20. In between the voltages of the first signal and the second signal, the voltage of the neutral signal is located. Since the fully hydraulic steering system 1 is a symmetrical system, the neutral signal is located halfway between the first signal and the second signal, respective the first and the second voltage.

In a first step, the difference 20 is shifted in an estimated neutral position in which it intersects with its central or middle position the graph f(15, 16). The central or middle position should also be understood as middle area. Thus, the ends of the difference 20, respective the first voltage and the second voltage, are substantially equally distanced to the intersection of the graph f(15, 16) and the difference 20.

The wheel angle sensors 15, 16 are calibrated, for example, the first signal L=1,55 V and the second signal R=4,1 V. Thus, the difference is 2,55 V. This difference or voltage span can then be interpolated onto the model, i. e. the virtual steering angle, and shifted until the virtual angle L and R is equal opposite. The difference between L and neutral is now known (1,37V), and together with the L value, 2,92V can be found, which is neutral.

In a second step, the estimated neutral position is verified, wherein the distances from the ends of the difference 20 to the graph f(15,16) need to be substantially equal, as indicated by the vertical lines 21. In case, the vertical lines 21 are equally long the neutral position is found. Based on this neutral position, the fully hydraulic steering system is calibrated.

In other words, a difference values between a first end signal or a second end signal and the function f(15, 16) are supposed to be substantially equal to each other, while the vertical lines 21 are also substantially equal to each other respectively.

The voltage found for the neutral position can be inputted into the hydraulic steering system 1 and the hydraulic steering system 1 then always has this neutral position until the next calibration is needed or initiated.

Fig. 2b depicts an example of the wrong estimation of the neutral position. The difference 20 does not intersect the graph f(15, 16) in its middle position such that the vertical lines 21 are not equally long This indicates that the difference 20 needs to intersect the graph f(15, 16) in the above described way, such that the neutral position is determined in a right way.

Besides a graphical solution, as described above, a numerical solution or the like is also possible.

### List of references

- 1: system
- 2: steering motor
- 3: command device
- 4: first branch
- 5: second branch
- 6: main spool
- 7: pilot valve arrangement
- 8: safety valve
- 9: safety valve solenoid

- 11: main spool
- 12: pilot valve arrangement
- 13: safety valve
- 14: safety valve solenoid
- 15: wheel angle sensor
- 16: wheel angle sensor
- 17: sensor
- 18: sensor
- 19: MMI/service tool
- 20: difference
- 21: vertical line

## Claims

1. Method for calibrating a fully hydraulic steering system (1) of a vehicle having steered wheels and a hydraulic steering motor (2), in which method the steered wheels are moved by the steering motor (2) in one direction until they reach a first end position and are then moved in the opposite direction until they reach a second end position, wherein the hydraulic steering system (1) comprises a wheel angle sensor (15, 16) determining the wheel angle of the steered wheels, wherein the wheel angle sensor (15, 16) outputs the signals in form of a voltage, wherein the wheel angle sensor (15, 16) determines a first signal in the first end position and a second signal in the second end position, wherein a neutral position of the steering motor is determined by determining a neutral signal between the first signal and the second signal, and wherein the difference between the neutral signal and the first signal is substantially equal to the difference between the neutral signal and the second signal,
**characterized in that**
the hydraulic steering system is calibrated based on this neutral position, wherein a relationship between the steering angle and the signal of the wheel sensor (15, 16) is described by a non-linear function f(15, 16), and wherein a virtual steering angle in relation to the respective voltage is repeatedly determined, wherein a relationship between the virtual steering angle and the respective voltage is the non-linear function f(15, 16).

2. Method according to claim 1, **characterized in that** the first end position and the second end position are substantially symmetrically to the longitudinal axis of the vehicle.

3. Method according to claim 1 or 2, **characterized in that** the neutral position is checked based on the virtual steering angle in relation to the wheel angle sensor (15, 16).

4. Method according to any of claims 1 to 3, **characterized in that** the wheel angle of the steered wheels is determined in relation to the longitudinal axis of the vehicle.

5. Method according to any of claims 1 to 4, **characterized in that** an end position is detected when a signal of the wheel angle sensor (15, 16) does not change for a predetermined period of time.

## Patentansprüche

1. Verfahren zum Kalibrieren eines vollhydraulischen Lenksystems (1) eines Fahrzeugs mit gelenkten Rädern und einem hydraulischen Lenkmotor (2), bei welchem Verfahren die gelenkten Räder durch den Lenkmotor (2) in eine Richtung bewegt werden, bis sie eine erste Endposition erreichen, und dann in die entgegengesetzte Richtung bewegt werden, bis sie eine zweite Endposition erreichen, wobei das hydraulische Lenksystem (1) einen Radwinkelsensor (15, 16) umfasst, der den Radwinkel der gelenkten Räder bestimmt, wobei der Radwinkelsensor (15, 16) die Signale in Form einer Spannung ausgibt, wobei der Radwinkelsensor (15, 16) ein erstes Signal in der ersten Endposition und ein zweites Signal in der zweiten Endposition bestimmt, wobei eine Neutralstellung des Lenkmotors durch Bestimmen eines Neutralsignals zwischen dem ersten Signal und dem zweiten Signal bestimmt wird, und wobei die Differenz zwischen dem Neutralsignal und dem ersten Signal im Wesentlichen gleich der Differenz zwischen dem Neutralsignal und dem zweiten Signal ist,
**dadurch gekennzeichnet, dass** das hydraulische Lenksystem auf der Grundlage dieser Neutralposition kalibriert wird, wobei eine Beziehung zwischen dem Lenkwinkel und dem Signal des Radsensors (15, 16) durch eine nichtlineare Funktion f(15, 16) beschrieben wird, und
wobei ein virtueller Lenkwinkel in Bezug auf die jeweilige Spannung wiederholt bestimmt wird, wobei eine Beziehung zwischen dem virtuellen Lenkwinkel und der jeweiligen Spannung die nichtlineare Funktion f(15, 16) ist.

2. Verfahren nach Anspruch 1, **dadurch gekennzeichnet, dass** die erste Endposition und die zweite Endposition im Wesentlichen symmetrisch zur Längsachse des Fahrzeugs sind.

3. Verfahren nach Anspruch 1 oder 2, **dadurch gekennzeichnet, dass** die Neutralstellung anhand des virtuellen Lenkwinkels in Bezug auf den Radwinkelsensor (15, 16) überprüft wird.

4. Verfahren nach einem der Ansprüche 1 bis 3, **dadurch gekennzeichnet, dass** der Radwinkel der gelenkten Räder in Bezug auf die Längsachse des Fahrzeugs bestimmt wird.

5. Verfahren nach einem der Ansprüche 1 bis 4, **dadurch gekennzeichnet, dass** eine Endposition erfasst wird, wenn sich ein Signal des Radwinkelsensors (15, 16) über einen vorgegebenen Zeitraum nicht ändert.

## Revendications

1. Procédé d'étalonnage d'un système de direction entièrement hydraulique (1) d'un véhicule ayant des roues directrices et un moteur de direction hydraulique (2), dans lequel les roues directrices sont déplacées par le moteur de direction (2) dans une direction jusqu'à ce qu'elles atteignent une première position finale, puis sont déplacées dans la direction opposée jusqu'à ce qu'elles atteignent une seconde position finale, où le système de direction hydraulique (1) comprend un capteur d'angle de roue (15, 16) déterminant l'angle de roue des roues directrices, où le capteur d'angle de roue (15, 16) délivre en sortie les signaux sous forme de tension, où le capteur d'angle de roue (15, 16) détermine un premier signal dans la première position finale et un second signal dans la seconde position finale, où une position neutre du moteur de direction est déterminée en déterminant un signal neutre entre le premier signal et le second signal, et où la différence entre le signal neutre et le premier signal est sensiblement égale à la différence entre le signal neutre et le second signal,
**caractérisé en ce que**
le système de direction hydraulique est étalonné sur la base de cette position neutre, où une relation entre l'angle de braquage et le signal du capteur de roue (15, 16) est décrite par une fonction non linéaire f(15, 16), et
où un angle de braquage virtuel par rapport à la tension respective est déterminé de manière répétée, où une relation entre l'angle de braquage virtuel et la tension respective est la fonction non linéaire f(15, 16).

2. Procédé selon la revendication 1, **caractérisé en ce que** la première position finale et la seconde position finale sont sensiblement symétriques par rapport à l'axe longitudinal du véhicule.

3. Procédé selon la revendication 1 ou 2, **caractérisé en ce que** la position neutre est vérifiée sur la base de l'angle de braquage virtuel par rapport au capteur d'angle de roue (15, 16).

4. Procédé selon l'une des revendications 1 à 3, **caractérisé en ce que** l'angle de roue des roues directrices est déterminé par rapport à l'axe longitudinal du véhicule.

5. Procédé selon l'une des revendications 1 à 4, **caractérisé en ce qu'**une position finale est détectée lorsqu'un signal du capteur d'angle de roue (15, 16) ne change pas pendant une période de temps prédéterminée.
